# EUROPEAN PATENT APPLICATION

(11) **EP 4 610 902 A1**
(43) Date of publication of application: **03.09.2025**
(21) Application number: 24205305.6
(22) Date of filing: 08.10.2024
(51) Int. Cl.: G06Q 10/06, G06Q 10/10

(54) **INFORMATION PROCESSING APPARATUS, INFORMATION PROCESSING SYSTEM, AND PROGRAM**

(30) Priority: 29.02.2024 JP 2024029752
(71) Applicant: CASIO COMPUTER CO., LTD., Tokyo 151-8543 (JP)
(72) Inventor: Saito, Takuya, Hamura-shi, Tokyo, 205-8555 (JP)
(74) Representative: Grünecker Patent- und Rechtsanwälte PartG mbB

(57) **Abstract**

Disclosed is an information processing apparatus that is configured to be communicably connected to a first terminal used by a learning instructor or administrator and a plurality of second terminals used by a plurality of learners, the second terminals each including an electronic sticky note function for creating an electronic sticky note, and includes: an acquirer that acquires creation history information of the electronic sticky note created by the learners via the second terminals; and a display controller that, in response to a school being designated as an analysis unit of usage status of the electronic sticky note function by the learning instructor or administrator via the first terminal, derives a total number of the electronic sticky note created by the learners of a school associated with the learning instructor or administrator based on the creation history information, and causes the first terminal to display a derived result.

## Description

### TECHNICAL FIELD

The present disclosure relates to an information processing apparatus, an information processing system and a program.

### DESCRIPTION OF RELATED ART

There have been education support systems that analyze a course by the number of sticky notes for each page of contents related to the course and displays a course analysis result screen (for example, see JP 2019-212238A) .

### SUMMARY OF THE INVENTION

However, in the invention described in JP 2019-212238A, the user cannot grasp the usage status of the electronic sticky note function in the entire school.

Objects of the present invention include allowing the user to easily grasp the usage status of the electronic sticky note function in the entire school.

An information processing apparatus (10) of the present disclosure is configured to be communicably connected to a first terminal (20A) configured to be used by a learning instructor or an administrator and a plurality of second terminals (20B) configured to be used by a plurality of learners, the plurality of second terminals (20B) each including an electronic sticky note function for creating an electronic sticky note related to learning. The information processing apparatus (10) comprises: an acquirer (11) that acquires creation history information of the electronic sticky note created by the plurality of learners via the plurality of second terminals (20B); and a display controller (11) that, in response to a school being designated as an analysis unit of usage status of the electronic sticky note function by the learning instructor or the administrator via the first terminal (20A), derives a total number of the electronic sticky note created by the plurality of learners of a same school as a school associated with the learning instructor or the administrator based on the creation history information, and causes the first terminal (20A) to display a derived result.

According to the present disclosure, the user can easily grasp the usage status of the electronic sticky note function in the entire school.

### BRIEF DESCRIPTION OF DRAWINGS

In the drawings:
FIG. 1 is a diagram of a schematic configuration of an information processing system according to the present embodiment;
FIG. 2 is a diagram of an example of the configuration of a database stored in a server;
FIG. 3 is a diagram of an example of a screen for a student to select an electronic dictionary to use;
FIG. 4 is a diagram of an example of a screen for a student to select a notebook to use;
FIG. 5 is a diagram of an example of a screen displayed when a notebook to be used is selected;
FIG. 6 is a flowchart illustrating a flow of an analysis process executed by a controller of the server;
FIG. 7 is a diagram of an example of a screen for selecting an item to be analyzed displayed when a teacher or an administrator logs in;
FIG. 8A is a diagram of an example of an analysis screen displayed when an electronic sticky note function is selected as the item to be analyzed;
FIG. 8B is a diagram of an example of an analysis screen displayed when the electronic sticky note function is selected as the item to be analyzed;
FIG. 8C is a diagram of an example of an analysis screen displayed when the electronic sticky note function is selected as the item to be analyzed;
FIG. 9A is a diagram of an example of an analysis screen displayed when an electronic dictionary function is selected as the item to be analyzed;
FIG. 9B is a diagram of an example of an analysis screen displayed when the electronic dictionary function is selected as the item to be analyzed;
FIG. 10A is a diagram of an example of an analysis screen displayed when a notebook function is selected as the item to be analyzed;
FIG. 10B is a diagram of an example of an analysis screen displayed when the notebook function is selected as the item to be analyzed;
FIG. 10C is a diagram of an example of an analysis screen displayed when the notebook function is selected as the item to be analyzed;
FIG. 11 is a diagram of an example of an analysis screen displayed when the number of accesses is selected as the item to be analyzed;
FIG. 12 is a diagram of an example of a graph displayed when the electronic sticky note function is selected as the item to be analyzed and "Homeroom" is selected as an analysis unit;
FIG. 13 is a diagram of an example of a graph displayed when the electronic sticky note function is selected as the item to be analyzed and "School" is selected as the analysis unit;
FIG. 14 is a diagram of an example of a graph displayed when the electronic dictionary function is selected as the item to be analyzed and "Homeroom" is selected as the analysis unit;
FIG. 15 is a diagram of an example of a graph displayed when the notebook function is selected as the item to be analyzed and "Homeroom" is selected as the analysis unit;
FIG. 16 is a diagram of an example of a graph displayed when the notebook function is selected as the item to be analyzed and "Course" is selected as the analysis unit; and
FIG. 17 is a diagram showing an example of a graph displayed when the number of accesses is selected as the item to be analyzed.

### DETAILED DESCRIPTION

Hereinafter, an information processing system according to an embodiment of the present disclosure will be described in detail with reference to the drawings. It is assumed that the information processing system is used by the administrators of schools, teachers at the schools who are learning instructors, and students who are learners. The schools include not only regular elementary schools, junior high schools, high schools, and universities, but also vocational schools, cram schools, preparatory schools, and the like.

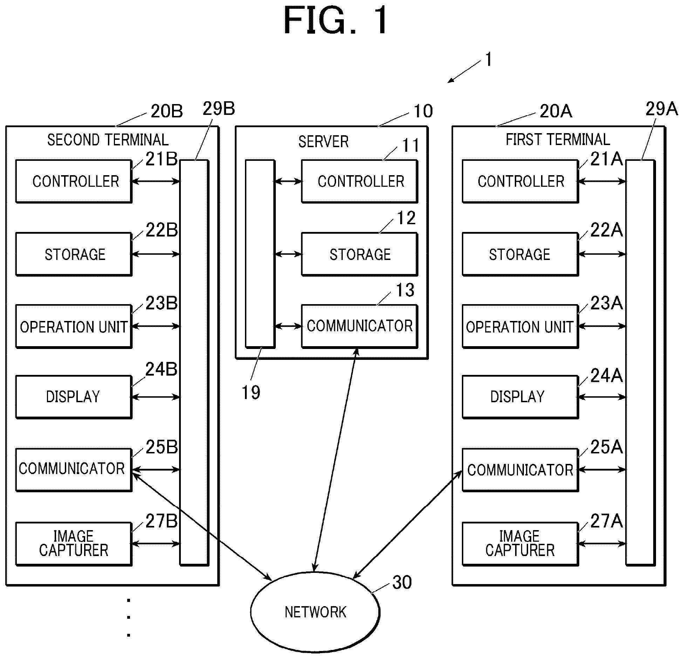

As shown in FIG. 1, the information processing system 1 includes a server 10, which is an information processing apparatus, a first terminal 20A, and a plurality of second terminals 20B. The server 10, the first terminal 20A, and the second terminals 20B are communicatively connected via a network 30. The network 30 is, for example, an arbitrary communication network such as the Internet, a wireless local area network (LAN), a wired LAN, a mobile communication network, a short-distance wireless communication network, or a combination of some or all of these. The information processing system 1 may include a plurality of first terminals 20A.

The server 10 is a web server that provides a learning support service to the first terminal 20A and second terminals 20B via the web. As shown in FIG. 1, the server 10 includes a controller (processor) 11, a storage 12, and a communicator 13. The controller 11, storage 12, and communicator 13 are connected to each other via a system bus 19.

The controller 11 includes a central processing unit (CPU), a random-access memory (R_AM), and the like. The CPU of the controller 11 is a processor that controls behavior of each unit of the server 10 by reading and executing programs stored in the storage 12 and performing various arithmetic processing. The controller 11 may include a plurality of processors, for example, a plurality of CPUs. The plurality of processors may execute a plurality of processes executed by the controller 11 of the present embodiment. In this case, the plurality of processors may be involved in a common process. Alternatively, the plurality of processors may independently execute different processes in parallel. The controller 11 functions as an acquirer and a display controller.

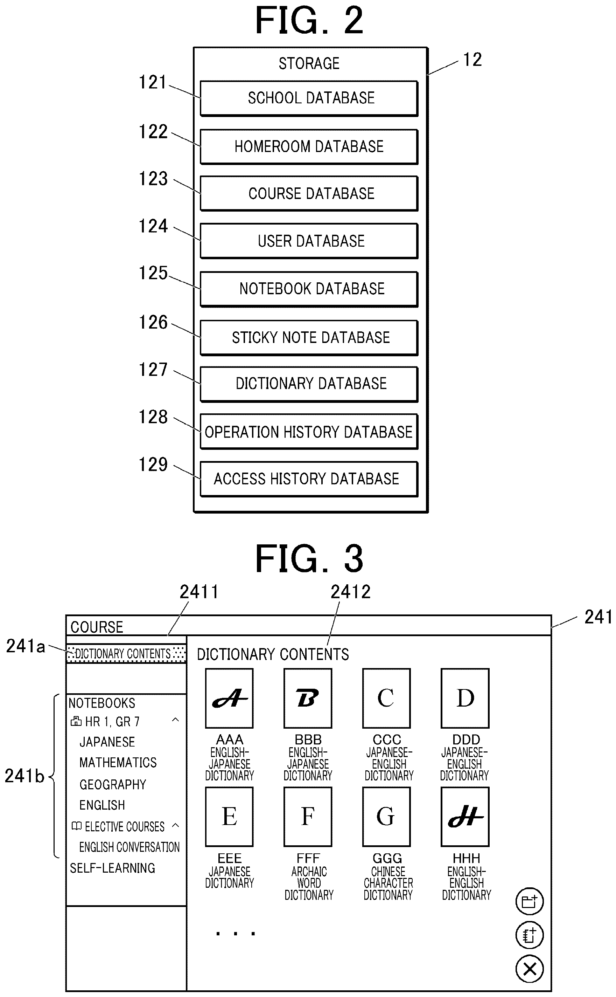

The storage 12 is a non-transitory recording medium readable by the CPU of the controller 11. The storage 12 stores programs and various data. The storage 12 includes a nonvolatile memory such as a hard disk drive (HDD) or a solidstate drive (SSD). As shown in FIG. 2, the storage 12 stores, for example, a school database 121, a homeroom database 122, a course database 123, a user database 124, a notebook database 125, a sticky note database 126, a dictionary database 127, an operation history database 128, an access history database 129, and the like.

The school database 121 stores information about schools using the learning support service provided by the information processing system 1. The school database 121 includes a table that stores information such as a school ID and a school name in association with each of the schools using the learning support service. The school ID is identification information for uniquely identifying each of the schools that uses the learning support service. The school name is the name of the school.

The homeroom database 122 stores information about homerooms of each school using the learning support service. The homeroom database 122 includes a table that stores information such as a homeroom ID, a homeroom name, and a school ID in association with each of the homerooms of each school using the learning support service. The homeroom ID is identification information for uniquely identifying each homeroom of each school that uses the learning support service. The homeroom name is the name of the homeroom. Examples of the homeroom name include "Homeroom 1, Grade 7". The school ID is the school ID of the school to which the homeroom belongs.

The course database 123 stores information about courses conducted at each school using the learning support service. The course database 123 includes a table that stores information such as a course ID, a course name, a subject, a teacher ID, and a school ID in association with each of the courses conducted at each school using the learning support service. The course ID is identification information for uniquely identifying each course of each school using the learning support service. The course name is the name of the course. Examples of the course name include a name that combines a homeroom and a subject such as "Mathematics, Homeroom 1, Grade 7", a name of an elective subject such as "Elective Chemistry", and the like. The subject is the name of the subject of the course. The teacher ID is the user ID of the teacher who teaches the course. The school ID is the school ID of the school at which the course is conducted.

The user database 124 stores information about users using the learning support service. The user database 124 includes a table that stores information such as a user ID, a password, a user category, a user name, a school ID, a homeroom ID, and a course ID in association with each of the users using the learning support service. The user ID is identification information for uniquely identifying each of the users using the learning support service. The user category indicates whether a user is the administrator, a teacher, or a student. The school ID is the school ID of the school to which the user belongs. The homeroom ID is the homeroom ID of the homeroom to which the user belongs when the user is a teacher or a student. The course ID is the course ID of the course to which the user belongs. When the user is a teacher, the course to which the user belongs is a course that the user teaches. When the user is a student, the course to which the user belongs is a course that the user is taking. When the user is a teacher or a student, one homeroom is set for the user. When the user is a teacher or a student, a plurality of courses is set for the user. One school is set for each user. Now, the homeroom falls under a first classification and a second classification in the present disclosure. The course falls under the first classification and the second classification in the present disclosure. The school falls under the first classification in the present disclosure. That is, the users are grouped into a first group belonging to the first classification corresponding to the first learning function described later, and a second group belonging to the second classification corresponding to the second learning function described later. The number of persons applicable to each of the analysis units is basically as follows: homeroom ≤ course < school. In some cases, there may be homeroom > course.

The notebook database 125 stores information about notebooks, which are electronic notebooks, created in the learning support service. In association with each of the notebooks created in the learning support service, the notebook database 125 includes a table that stores information such as a notebook ID, a notebook name, a user ID, a course ID, a thumbnail image of the notebook, and the creation date and time. The notebook ID is identification information for uniquely identifying the created notebook. The user ID is the user ID of the user who has created the notebook. The course ID is the course ID of the course for which the notebook has been created.

The sticky note database 126 stores information about electronic sticky notes created in the learning support service. In association with each of the electronic sticky notes created in the learning support service, the sticky note database 126 includes a table that stores information such as a sticky note ID, a user ID, a notebook ID, a type of the sticky note, contents of the sticky note, a thumbnail image of the sticky note, and the creation date and time. The sticky note ID is identification information for uniquely identifying the created sticky note. The notebook ID is the notebook ID of the notebook in which the sticky note has been created. The type of the sticky note is information indicating the type of the sticky note such as a text sticky note, a link sticky note, a file sticky note, a dictionary sticky note, or a math sticky note.

The dictionary database 127 stores information about electronic dictionaries usable by the user in the learning support service. In association with each of the electronic dictionaries usable by the user in the learning support service, the dictionary database 127 includes a table that stores information such as a dictionary ID, a dictionary name, a type, a storage location, and a thumbnail image of the dictionary. The dictionary ID is identification information for uniquely identifying the electronic dictionary available in the learning support service. The dictionary name is the name of the electronic dictionary. The type is information indicating the type of the dictionary such as an English-Japanese dictionary or a Japanese dictionary. The storage location is information indicating the location where data of the electronic dictionary is stored. The thumbnail image of the dictionary is image data of a thumbnail image such as the front cover of the dictionary.

The operation history database 128 stores information about operation histories of the users in the learning support service. The operation history database 128 includes a table that stores information such as a user ID, an operation ID, a date and time, a dictionary ID, and a course ID in association with each operation. The user ID is the user ID of the user who has performed the operation. The operation ID is identification information for identifying the operation performed by the user. The date and time are the date and time when the operation has been performed. The dictionary ID is identification information, when an operation related to a dictionary is performed, for identifying the operated dictionary. The course ID is identification information, when an operation related to a notebook is performed, for identifying the course in which the operation has been performed.

The access history database 129 stores an access history when screens on the website providing the learning support service are accessed. The access history database 129 includes a table that stores information such as a user ID, a screen ID, and a date and time in association with each access to a screen on the website. The user ID is the user ID of the user who has accessed the screen. The screen ID is identification information of the accessed screen. The date and time are the date and time of the access.

In the storage 12, at least one analysis unit among the homeroom, course, and school is stored in association with each learning function provided by the server 10 as an analysis unit of the usage status of the learning function. The first learning function, which will be described later, is associated with the analysis units of the homeroom, course, and school, which fall under the first classification. The second learning function, which will be described later, is associated with the analysis units of the homeroom and course, which fall under the second classification. An analysis unit not falling under the first classification may be associated with the first learning function. Also, an analysis unit not falling under the second classification may be associated with the second learning function. The communicator 13 performs a communication operation in accordance with a predetermined communication standard. By this communication operation, the communicator 13 transmits and receives data to and from the first terminal 20A or each of the second terminals 20B via the network 30.

The first terminal 20A is a terminal device used by the administrator or a teacher. The first terminal 20A may be any of a personal computer, a portable terminal device such as a tablet, and a mobile communication device such as a smartphone. The first terminal 20A includes a controller 21A, a storage 22A, an operation unit 23A, a display 24A, a communicator 25A, and an image capturer 27A. The controller 21A, storage 22A, operation unit 23A, display 24A, communicator 25A, and image capturer 27A are connected to each other via a system bus 29A.

The controller 21A includes a CPU, a RAM, and the like. The CPU of the controller 21A is a processor that controls behavior of each unit of the first terminal 20A by reading and executing a program stored in the storage 22A and performing various arithmetic processing. The controller 21A may include a plurality of processors, for example, a plurality of CPUs. The plurality of processors may execute a plurality of processes executed by the controller 21A of the present embodiment. In this case, the plurality of processors may be involved in a common process. Alternatively, the plurality of processors may independently execute different processes in parallel.

The storage 22A is a non-transitory recording medium readable by the CPU of the controller 21A. The storage 22A stores a program and various data. The storage 22A includes, for example, a nonvolatile memory such as an HDD or an SSD. The program stored in the storage 22A includes a web browser. The operation unit 23A includes, for example, at least one of a keyboard, a touch panel, or a mouse. The operation unit 23A receives an operation by the user, and outputs an input signal corresponding to the operation to the controller 21A.

The display 24A includes a liquid crystal display (LCD) or an electro luminescence (EL) display. The display 24A performs various displays according to display information instructed by the controller 21A. The communicator 25A performs a communication operation in accordance with a predetermined communication standard. By this communication operation, the communicator 25A transmits and receives data to and from the server 10 via the network 30.

The image capturer 27A is a digital camera that includes an optical system and an imaging element such as a charge coupled device (CCD) or a complementary metal oxide semiconductor (CMOS). The image capturer 27A captures an image of a subject, generates image data of a still image or a moving image, and outputs the image data to the controller 21A.

Each of the second terminals 20B is a terminal device used by a student. Similarly to the first terminal 20A, the second terminal 20B may be any of a personal computer, a portable terminal device such as a tablet, and a mobile communication device such as a smartphone. The second terminal 20B includes a controller 21B, a storage 22B, an operation unit 23B, a display 24B, a communicator 25B, and an image capturer 27B. The controller 21B, storage 22B, operation unit 23B, display 24B, communicator 25B, and imaging capture 27B are connected to each other via a system bus 29B.

The controller 21B includes a CPU, a RAM, and the like. The CPU of the controller 21B is a processor that controls behavior of each unit of the second terminal 20B by reading and executing a program stored in the storage 22B and performing various arithmetic processing. The controller 21B may include a plurality of processors, for example, a plurality of CPUs. The plurality of processors may execute a plurality of processes executed by the controller 21B of the present embodiment. In this case, the plurality of processors may be involved in a common process. Alternatively, the plurality of processors may independently execute different processes in parallel. The storage 22B, operation unit 23B, display 24B, communicator 25B, and image capturer 27B have the same configurations as the storage 22A, operation unit 23A, display 24A, communicator 25A, and image capturer 27A, respectively, and thus the description thereof is omitted.

Next, behavior of the information processing system 1 will be described. First, described is a process executed by the controller 11 of the server 10 when a student logs in to the website of the learning support service via a second terminal 20B.

When the student logs in to the website of the learning support service via the second terminal 20B, the controller 11 of the server 10 provides the learning support service for students to the second terminal 20B in cooperation with the program stored in the storage 12. The learning support service for students provides a plurality of different learning functions to the second terminal 20B. The learning functions provided by the learning support service for students include an electronic dictionary function, a notebook function, and an electronic sticky note function. The notebook function and the electronic sticky note function correspond to the first learning function of the present disclosure. The electronic dictionary function corresponds to the second learning function of the present disclosure. The controller 11 performs the following processing to provide the plurality of different learning functions.

When the student logs in to the web site of the learning support service via the second terminal 20B, the controller 11 of the server 10 generates screen information for displaying a screen 241 by the browser for the student to select a learning function to use. Then, the controller 11 transmits the generated screen information to the second terminal 20B via the communicator 13. Thus, the controller 11 causes the display 24B of the second terminal 20B to display the screen 241.

The screen 241 includes a region 2411 and a region 2412, as shown in FIG. 3. In the region 2411, a selection field for the user to select a learning function to be used is displayed. In the selection field, for example, a dictionary content selection field 241a and a notebook selection field 241b are displayed. The dictionary content selection field 241a is a field for selecting an electronic dictionary function as a learning function to be used. The notebook selection field 241b is a field for selecting a notebook function as a learning function to be used. In the notebook selection field 241b, a selection field for selecting a course that uses notebooks is displayed. In the region 2412, a user interface (UI) for using the learning function selected in the region 2411 is displayed. In the present embodiment, the electronic dictionary function is selected by default, and a list for the user to select an electronic dictionary to use is displayed in the region 2412.

For example, when the log-in is completed, the controller 11 reads the thumbnail images of the respective electronic dictionaries stored in the dictionary database 127, generates screen information for displaying the screen 241 in which the thumbnail images of the electronic dictionaries are displayed in a list in the region 2412, and transmits the generated screen information to the second terminal device 20B via the communicator 13.

When the second terminal 20B receives the screen information of the screen 241 from the server 10 via the communicator 25B, the controller 21B causes the display 24B to display the screen 241 in cooperation with the browser. When one of the thumbnail images of the electronic dictionaries is selected by an operation via the operation unit 23B on the displayed screen 241, the controller 21B transmits operation information to the server 10 via the communicator 25B indicating that the operation of selecting the electronic dictionary has been performed. The operation information includes, for example, information such as a user ID, an operation ID, a dictionary ID, and the operation date and time. The user ID is the user ID of the currently logged-in user. The operation ID is the operation ID indicating that the operation of selecting an electronic dictionary has been performed. The dictionary ID is the dictionary ID of the selected electronic dictionary.

When the server 10 receives the operation information from the second terminal 20B via the communicator 13 indicating that the operation of selecting the electronic dictionary has been performed, the controller 11 causes the display 24B of the second terminal 20B to display the contents of the selected electronic dictionary. For example, the controller 11 reads the data of the selected electronic dictionary from the dictionary database 127, generates screen information for displaying the contents of the selected electronic dictionary, and transmits the generated screen information to the second terminal 20B via the communicator 13.

When the second terminal 20B receives the screen information of the contents of the electronic dictionary transmitted from the server 10 via the communicator 25B, the controller 21B causes the display 24B to display the contents of the electronic dictionary in cooperation with the browser. When an operation such as a word search is performed from the displayed contents, the controller 21B transmits operation information indicating the performed operation to the server 10 via the communicator 25B. The operation information includes, for example, information such as a user ID, an operation ID, a dictionary ID, and the operation date and time. The user ID is the user ID of the currently logged-in user. The operation ID is the operation ID indicating the performed operation. The dictionary ID is the dictionary ID of the electronic dictionary in use.

When the server 10 receives the operation information transmitted from the second terminal 20B via the communicator 13 indicating the operation performed on the contents of the electronic dictionary, the controller 11 causes the display 24B of the second terminal 20B to display a screen corresponding to the performed operation. For example, when the operation is to instruct a search for a word, the controller 11 searches for the word for which the search is instructed using the dictionary database 127 and generates screen information for displaying a screen showing the search result. Then, the controller 11 transmits the generated screen information to the second terminal 20B via the communicator 13. When the controller 11 receives the operation information transmitted from the second terminal 20B indicating the operation performed on the contents of the electronic dictionary, the controller 11 adds a record to the operation history database 128 and stores the operation history based on the received operation information. For example, when an operation of searching for a word is performed, the controller 11 stores the following in the operation history database 128 as the operation history: the user ID of the logged-in student; the operation ID representing the search in the electronic dictionary; the search date and time; and the dictionary ID of the electronic dictionary used for the search. The screen 241 for using the electronic dictionary function is also displayed on the display 24B of the second terminal 20B by the same procedure as described above when the dictionary content selection field 241a is pressed by an operation via the operation unit 23B.

On the other hand, when an operation of selecting a notebook function of a course in the notebook selection field 241b is performed on the screen 241 by an operation via the operation unit 23B, the controller 21B transmits operation information to the server 10 via the communicator 25B indicating that the operation of selecting the notebook function has been performed. The operation information includes, for example, information such as a user ID, an operation ID, a course ID, and the operation date and time. The user ID is the user ID of the currently logged-in user. The operation ID is the operation ID indicating that the operation of selecting a notebook function has been performed. The course ID is the course ID of the selected course.

When the server 10 receives the operation information transmitted from the second terminal 20B via the communicator 13 indicating that the operation of selecting the notebook function has been performed, the controller 11 generates screen information for displaying a screen 242 by the browser and transmits the generated screen information to the second terminal 20B via the communicator 13. Thus, the controller 11 causes the display 24B of the second terminal 20B to display the screen 242. The screen 242 is a screen for the user to use the notebook function and the electronic sticky note function. In the present embodiment, the notebook function is to create a notebook and is provided on the notebook. The electronic sticky note function is to create an electronic sticky note. Since an electronic sticky note is created on a notebook, the notebook function includes the electronic sticky note function.

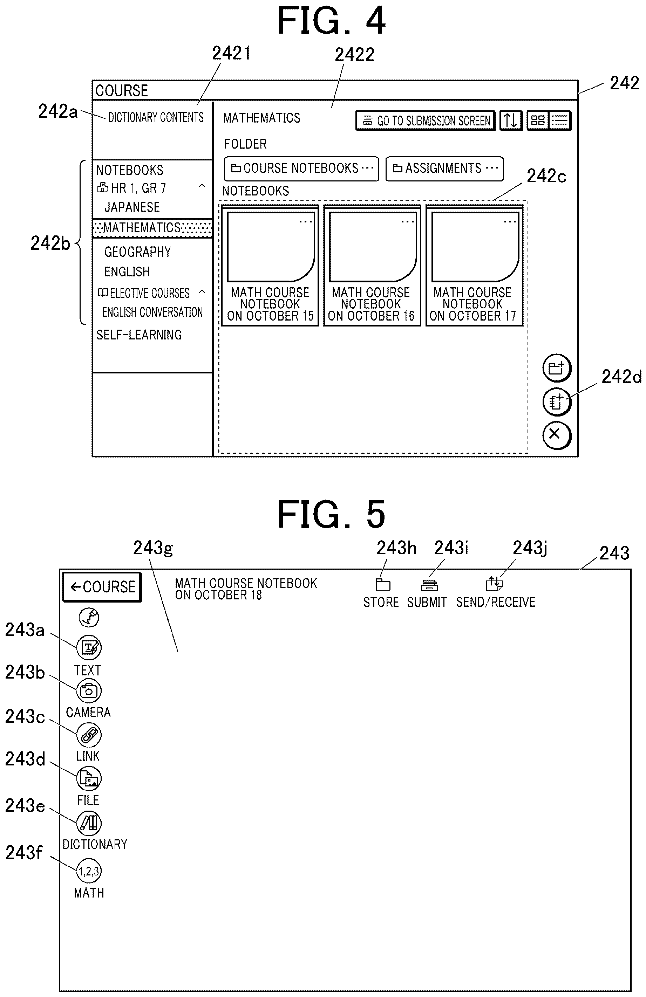

The screen 242 includes a region 2421 and a region 2422, as shown in FIG. 4. The region 2421 is the same as the region 2411, and an electronic dictionary selection filed 242a and a notebook selection field 242b are displayed in the region 2421. In the region 2422, a notebook list 242c of the selected course and an operation button 242d for creating a new notebook are displayed.

For example, the controller 11 searches the notebook database 125 with the user ID and the course ID included in the operation information transmitted from the second terminal 20B. Next, the controller 11 acquires the thumbnail image of the notebook from each record obtained by the search. Then, as shown in FIG. 4, the controller 11 generates screen information of the screen 242 in which the acquired thumbnail image is displayed on the notebook list 242c and transmits the generated screen information to the second terminal 20B via the communicator 13.

When the second terminal 20B receives the screen information for displaying the screen 242 transmitted from the server 10 via the communicator 25B, the controller 21B causes the display 24B to display the screen 242 in cooperation with the browser. When the operation button 242d on the screen 242 is pressed by an operation via the operation unit 23B, the controller 21B causes the display 24B to display a screen for creating a new notebook as a pop-up. When a notebook name is input by an operation via the operation unit 23B and an operation button for instructing to create a notebook is pressed from the pop-up screen, the controller 21B transmits operation information to the server 10 via the communicator 25B indicating that the operation for creating the notebook has been performed. The operation information includes information such as a user ID, an operation ID, the operation date and time, a course ID, and a notebook name. The user ID is the user ID of the currently logged-in user. The operation ID is the operation ID indicating that the operation of creating a notebook has been performed. The course ID is the course ID of the selected course. The notebook name is the input notebook name.

When the server 10 receives the operation information transmitted from the second terminal 20B via communicator 13 indicating that the operation to create the notebook has been performed, the controller 11 issues a new notebook ID. The controller 11 also creates a thumbnail image in which the input notebook name and the like are displayed. Next, the controller 11 adds a record to the notebook database 125, and stores the notebook name, the user ID, the course ID, the thumbnail image of the notebook, the creation date and time, and the like based on the issued notebook ID and the received operation information. Then, the controller 11 generates screen information of the screen 242 in which the thumbnail image of the new notebook is added to the notebook list 242c and transmits the generated screen information to the second terminal 20B via communicator 13. Further, the controller 11 adds a record to the operation history database 128, and stores in the operation history database 128 the user ID, the operation ID, the operation date and time, and the course ID included in the operation information.

When the second terminal 20B receives the screen information transmitted from the server 10 via the communicator 25B for displaying the screen 242 in which the thumbnail image of the new notebook is added, the controller 21B causes the display 24B to display the screen 242 in cooperation with the browser.

Further, in second terminal 20B, when an operation of selecting one of the notebooks from the notebook list 242c on the screen 242 is performed by an operation via the operation unit 23B, the controller 21B transmits operation information to the server 10 via the communicator 25B indicating that the operation of selecting the notebook has been performed. The operation information includes a user ID, an operation ID, the operation date and time, a course ID, a notebook ID, and the like. The user ID is the user ID of the currently logged-in user. The operation ID is the operation ID indicating that the operation of selecting the notebook has been performed. The course ID is the course ID of the selected course. The notebook ID is the notebook ID of the selected notebook.

When the server 10 receives the operation information transmitted from the second terminal 20B via communicator 13 indicating that the operation of selecting the notebook has been performed, the controller 11 generates screen information of a screen 243 showing the contents of the selected notebook. Then, the controller 11 transmits the generated screen information to the second terminal 20B via the communicator 13. When the second terminal 20B receives the screen information for displaying the screen 243 of the selected notebook transmitted from the server 10 via the communicator 25B, the controller 21B causes the display 24B to display the screen 243 in cooperation with the browser.

On the screen 243, as shown in FIG. 5, a text sticky note button 243a, a camera sticky note button 243b, a link sticky note button 243c, a file sticky note button 243d, a dictionary sticky note button 243e, a math sticky note button 243f, and the like are arranged. A sticky note region 243g is also provided on the screen 243. The sticky note region 243g is for displaying an electronic sticky note created on the notebook. In the notebook, contents learned by the user and information acquired for learning are recorded as an electronic sticky note. If an electronic sticky note has already been created, a thumbnail image of the electronic sticky note is displayed in the sticky note region 243g.

The text sticky note button 243a is an operation button for instructing to create a text sticky note. The text sticky note is an electronic sticky note for recording and displaying information entered in text. The camera sticky note button 243b is an operation button for instructing to create a camera sticky note. The camera sticky note is an electronic sticky note for recording and displaying an image captured by the image capturer 27B or the like. The link sticky note button 243c is an operation button for instructing to create a link sticky note. The link sticky note is an electronic sticky note for recording and displaying a uniform resource locator (URL) of a linked website. The file sticky note button 243d is an operation button for instructing to create a file sticky note. The file sticky note is an electronic sticky note for recording and displaying an image file, a portable document format (PDF) file, or the like. The dictionary sticky button 243e is an operation button for instructing to create a dictionary sticky note. The dictionary sticky note is an electronic sticky note for recording and displaying information searched in an electronic dictionary. The math sticky button 243f is an operation button for instructing to create a math sticky note. The math sticky note is a sticky note for recording and displaying an entered mathematical expression, graph, or the like.

On the screen 243, a store icon 243h, a submit icon 243i, and a send/receive icon 243j are arranged. The store icon 243h is an icon for instructing to store an electronic sticky note dragged onto the store icon 243h in a predetermined storage destination. The submit icon 243i is an icon for instructing to submit an electronic sticky note dragged onto the submit icon 243i to a designated submission destination. The send/receive icon 243j is an icon for instructing to transmit an electronic sticky note dragged onto the send/receive icon 243j to a designated destination.

In the second terminal 20B, when one of the text sticky note button 243a to the math sticky note button 243f on the screen 243 is operated by an operation via the operation unit 23B, the controller 21B causes the display 24B to display a UI for creating an electronic sticky note according to the type of the operated button. The controller 21B creates an electronic sticky note in response to the operation on the displayed UI, and displays the electronic sticky note in the sticky note region 243g. Then, the controller 21B transmits to the server 10 via the communicator 25B operation information indicating that the operation of creating the electronic sticky note has been performed and electronic sticky note information which is content of information of the created electronic sticky note. The transmitted operation information includes a user ID, an operation ID, the operation date and time, a course ID, a notebook ID, and the like. The user ID is the user ID of the currently logged-in user. The operation ID is the operation ID indicating that the operation of creating the electronic sticky note has been performed. The operation ID is an ID that allows the type of the created electronic sticky note to be specified. The course ID is the course ID of the selected course. The notebook ID is the notebook ID of the notebook in which the electronic sticky note is created.

When the server 10 receives from the second terminal 20B via the communicator 13 the operation information indicating that the operation of creating the electronic sticky note has been performed and the electronic sticky note information, the controller 11 issues a new sticky note ID, and creates a thumbnail image of the created electronic sticky note. Next, the controller 11 adds a record to the sticky note database 126, and stores the user ID, the notebook ID, the type of the sticky note, the content of the electronic sticky note, the thumbnail image, and the like based on the issued sticky note ID and the received operation information. The controller 11 also adds a record to the operation history database 128, and stores the user ID, the operation ID, the operation date and time, and the like in the operation history database 128 as the operation history based on the received operation information. The information stored here corresponds to the creation history information of electronic sticky notes.

In the second terminal 20B, when the store icon 243h, submit icon 243i, or send/receive icon 243j of the screen 243 is operated by an operation via the operation unit 23B and an operation instructing to store, submit, or send/receive an electronic sticky note is executed, the controller 21B transmits operation information to the server 10 via the communicator 25B indicating that the operation instructing to store, submit, or send/receive the electronic sticky note has been performed. The transmitted operation information includes a user ID, an operation ID, the operation date and time, a sticky note ID, a destination, and the like. The user ID is the user ID of the currently logged-in user. The operation ID is the operation ID of the operation instructing to store, submit, or send/receive the electronic sticky note. The sticky note ID is the sticky note ID of the electronic sticky note to be stored, submitted, or sent/received. The destination is information of a storage destination, a submission destination, or a transmission/reception destination of the electronic sticky note.

When the server 10 receives from the second terminal 20B via the communicator 13 the operation information indicating that the operation instructing to store, submit, or send/receive the electronic sticky note has been performed, the controller 11 adds a record to the operation history database 128, and stores the user ID, the operation ID, and the operation date and time in the operation history database 128 as the operation history. The controller 11 reads the electronic sticky note information of the received sticky note ID from the sticky note database 126, and stores or transmits the read electronic sticky note information to the designated destination. Thus, when the student logs in from the second terminal 20B, the controller 11 of the server 10 provides the electronic dictionary function, the notebook function, and the electronic sticky note function in response to an operation by the student.

In addition, each time a screen on the website that provides the learning support service is accessed via the first terminal 20A or the second terminal 20B, the controller 11 adds a record to the access history database 129 and stores a user ID, a screen ID, and a date and time. The user ID is the user ID of the user who has accessed the screen. The screen ID is the identification information of the accessed screen. The date and time are the date and time of the access.

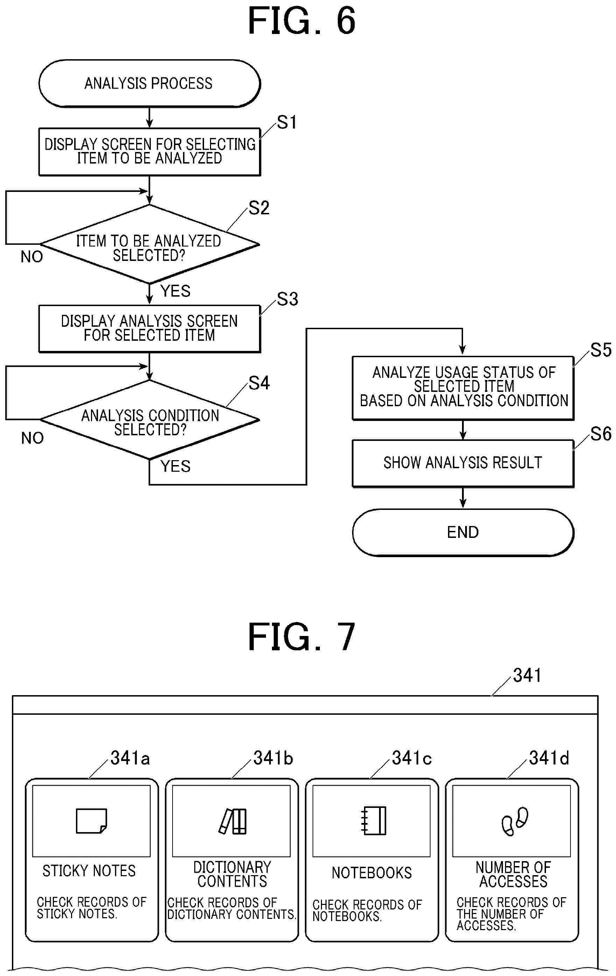

Next, a process when the administrator or a teacher logs in to the learning support service via the first terminal 20A will be described. When the administrator or the teacher logs in via the first terminal 20A and performs a predetermined operation for instructing analysis of a learning function, the controller 11 of the server 10 executes the analysis process shown in FIG. 6. Specifically, the controller 11 executes the analysis process in cooperation with a program stored in the storage 12. The analysis process will be described below with reference to FIG. 6.

In the analysis process, first, the controller 11 causes the display 24A of the first terminal 20A to display a screen 341 for selecting an item to be analyzed (step S1). For example, the controller 11 generates screen information for displaying the screen 341 by the browser and transmits the generated screen information to the first terminal 20A via the communication 13. Thus, the controller 11 causes the display 24A of the first terminal 20A to display the screen 341.

On the screen 341, as shown in FIG. 7, an electronic sticky note selection button 341a, an electronic dictionary selection button 341b, a notebook selection button 341c, and a number of accesses selection button 341d are arranged. The electronic sticky note selection button 341a is a button for selecting the electronic sticky note function as the item to be analyzed. The electronic dictionary selection button 341b is a button for selecting the electronic dictionary function as the item to be analyzed. The notebook selection button 341c is a button for selecting the notebook function as the item to be analyzed. The number of accesses selection button 341d is a button for selecting the number of accesses as the item to be analyzed.

The controller 11 waits for reception of operation information transmitted from the first terminal 20A via the communicator 13 indicating that an operation of selecting the item to be analyzed has been performed (step S2). When the first terminal 20A receives the screen information of the screen 341 transmitted from the server 10 via the communicator 25A, the controller 21A causes the display 24A to display the screen 341 in cooperation with the browser. When one of the selection buttons is selected from the displayed screen 341 by an operation via the operation unit 23A, the controller 21A transmits operation information to server 10 via the communicator 25A indicating that the operation of selecting the item to be analyzed has been performed. The operation information includes information indicating the selected item.

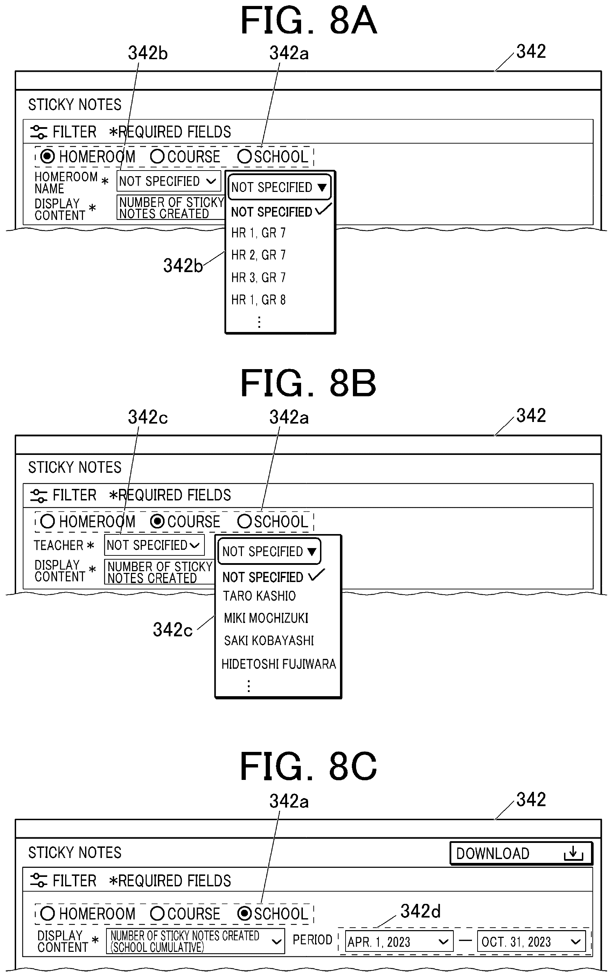

When it is determined that the operation information transmitted from the first terminal 20A indicating that the operation of selecting the item to be analyzed has been performed has been received (step S2; YES), the controller 11 causes display 24A of the first terminal 20A to display one of a screen 342 to a screen 345 for analysis (see FIG. 8A to FIG. 11) in accordance with the selected item (step S3). The controller 11 determines the classification corresponding to the analysis units of the selected item based on the information of the analysis units of each learning function stored in the storage 12. Based on the determined classification, the controller 11, for example, generates screen information for displaying one of the screen 342 to the screen 345 by the browser, and transmits the generated screen information to the first terminal 20A via the communicator 13. Thus, the controller 11 causes the display 24A of the first terminal 20A to display one of the screen 342 to the screen 345 shown in FIG. 8A to FIG. 11, respectively, in accordance with the selected item.

The screen 342 is displayed when the electronic sticky note function, that is, the first learning function is selected as the item to be analyzed, as shown in FIG. 8A to FIG. 8C. The screen 342 is for analyzing the usage status of the electronic sticky note function. As described above, the first learning function is associated with the homeroom, course, and school, which fall under the first classification, as the analysis units. Therefore, a radio button 342a for selecting the homeroom, course, or school as the analysis unit is displayed on the screen 342. When the homeroom is selected by an operation via the operation unit 23A on the screen 342, a pull-down 342b for selecting a homeroom name to be analyzed is displayed as shown in FIG. 8A. When the course is selected by an operation via the operation unit 23A on the screen 342, a pull-down 342c for selecting a teacher to be analyzed is displayed as shown in FIG. 8B. When the school is selected by an operation via the operation unit 23A on the screen 342, a selection field 342d for selecting a period to be analyzed is displayed as shown in FIG. 8C.

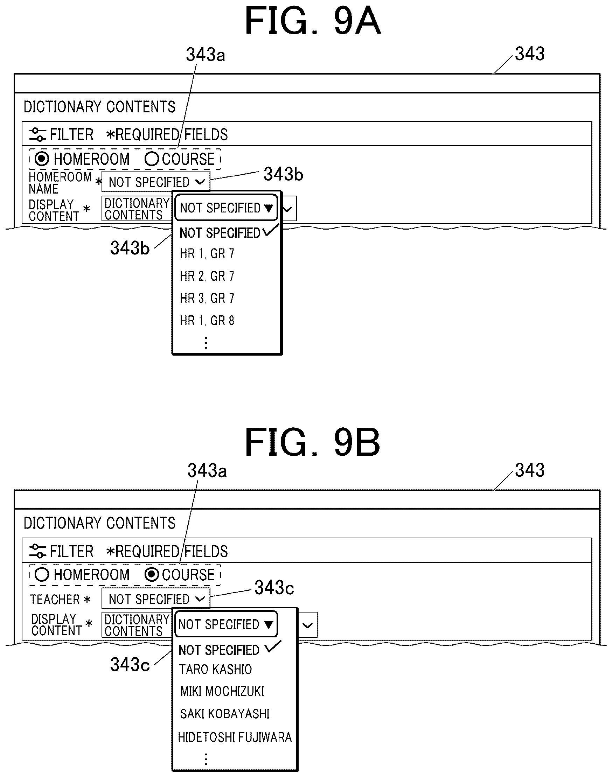

The screen 343 is displayed when the electronic dictionary function, that is, the second learning function is selected as the item to be analyzed, as shown in FIG. 9A to FIG. 9B. The screen 343 is for analyzing the usage status of the electronic dictionary function. As described above, the second learning function is associated with the homeroom and course, which fall under the second classification, as the analysis units. Therefore, a radio button 343a for selecting the homeroom or course as the analysis unit is displayed on the screen 343. A radio button for selecting the school is not displayed on the screen 343. The electronic dictionary function uses different dictionaries for each grade. Therefore, it is meaningless to analyze the usage status of each electronic dictionary in the entire school. When the homeroom is selected by an operation via the operation unit 23A on the screen 343, a pull-down 343b for selecting a homeroom name to be analyzed is displayed as shown in FIG. 9A. When the course is selected by an operation via the operation unit 23A on the screen 343, a pull-down 343c for selecting a teacher to be analyzed is displayed as shown in FIG. 9B.

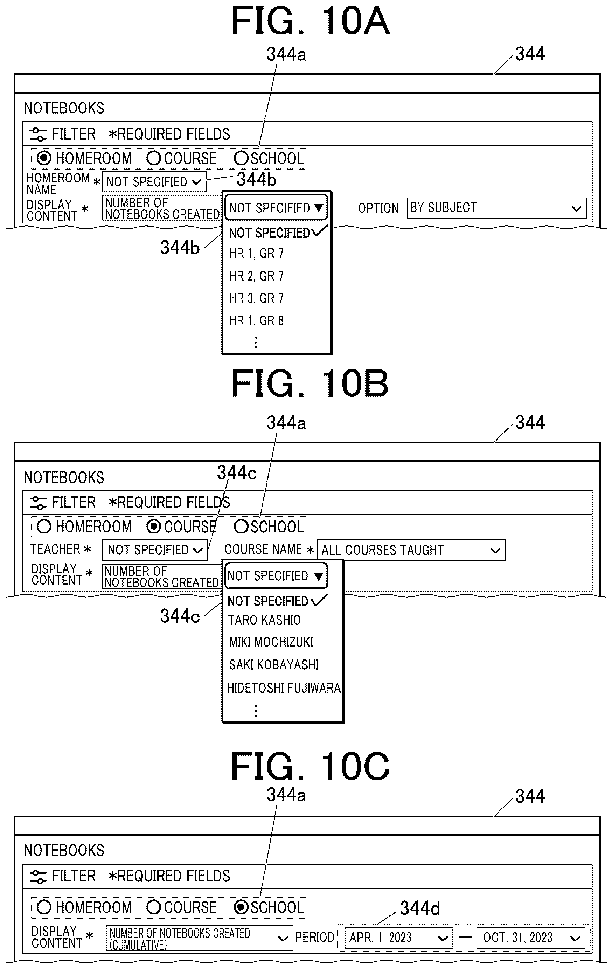

The screen 344 is displayed when the notebook function, that is, the first learning function is selected as the item to be analyzed, as shown in FIG. 10A to FIG. 10C. The screen 344 is for analyzing the usage status of the notebook function. Therefore, a radio button 344a for selecting the homeroom, course, or school as the analysis unit is displayed on the screen 344. When the homeroom is selected by an operation via the operation unit 23A on the screen 344, a pull-down 344b for selecting a homeroom name to be analyzed is displayed as shown in FIG. 10A. When the course is selected by an operation via the operation unit 23A on the screen 344, a pull-down 344c for selecting a teacher to be analyzed is displayed as shown in FIG. 10B. When the school is selected by an operation via the operation unit 23A on the screen 344, a selection field 344d for selecting a period to be analyzed is displayed as shown in FIG. 10C.

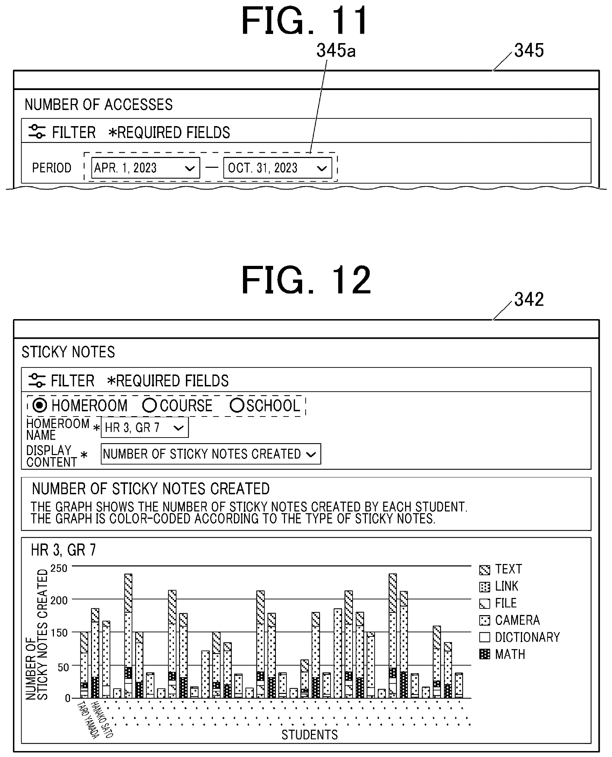

The screen 345 is displayed when the number of accesses is selected as the item to be analyzed, as shown in FIG. 11. A selection field 345a for selecting a period to be analyzed is displayed on the screen 345. A radio button or the like for selecting an analysis unit is not displayed on the screen 345. This is because the analysis of the number of accesses is a function for allowing the administrator to easily grasp the usage status of the learning support service in the entire school.

As described above, the controller 11 changes the radio button for selecting the analysis unit for each item selected as the analysis target of the usage status to display the screen for analysis. The controller 11 also displays the screen for analysis with the pull-down items changing in accordance with the analysis unit selected by the radio button. Therefore, since only appropriate items are displayed as options of the analysis condition of the usage status of the selected item, it is possible to prevent the user from selecting an inappropriate condition by mistake, making it possible to appropriately analyze the usage status of the selected learning function or the like. As a result, the user can easily grasp the usage status of the selected learning function. That is, according to the server 10, the interaction process between the user and the server 10 can reliably assist the user in performing a technical task. Here, the technical task performed by the user is to select appropriate analysis conditions in accordance with the learning functions provided by the server 10.

The controller 11 waits for reception of operation information from the first terminal 20A via the communicator 13 indicating that an operation of selecting the analysis condition has been performed (step S4) . When the first terminal 20A receives the screen information of one of the screen 342 to the screen 345 transmitted from the server 10 via the communicator 25A, the controller 21A causes the display 24A to display the screen corresponding to the received screen information in cooperation with the browser. When an operation of selecting the analysis condition is performed by an operation via the operation unit 23A from the displayed screen, the controller 21A transmits operation information to the server 10 via the communication unit 25A indicating that the operation of selecting the analysis condition has been performed. The operation information includes information indicating the selected analysis condition including the analysis unit.

When receiving the operation information from the first terminal 20A indicating that the operation of selecting the analysis condition has been performed (step S4; YES), the controller 11 analyzes the usage status of the item to be analyzed based on the selected analysis condition (step S5). Then, the controller 11 causes the display 24A of the first terminal 20A to display a screen of the analysis result (step S6). That is, the controller 11 generates screen information for displaying the analysis result by the browser and transmits the generated screen information to the first terminal 20A via the communicator 13.

For example, when "Sticky Note Function" is selected as the item to be analyzed, "Homeroom" as the analysis unit, "Homeroom 3, Grade 7" as the homeroom name to be analyzed, and "Number of Sticky Notes Created" as the display content, the controller 11 derives the number of electronic sticky notes created by each student belonging to the homeroom selected as the analysis target for each type of sticky note. For example, first, the controller 11 extracts students of the selected homeroom from the user database 124. Next, the controller 11 derives the number of electronic sticky notes created by each extracted student for each type of sticky note based on the data stored in the operation history database 128. Then, the controller 11 generates screen information for displaying a graph on the screen 342 by graphing the number of electronic sticky notes created by each extracted student in a different manner for each type of sticky note. When the first terminal 20A receives the screen information of the screen 342 on which the graph is displayed transmitted from the server 10 via the communicator 25A, the controller 21A causes the display 24A to display the screen 342 corresponding to the received screen information in cooperation with the browser. As shown in FIG. 12, on the screen 342, the graph is displayed in which the horizontal axis represents each student belonging to Homeroom 3, Grade 7, and the vertical axis represents the number of electronic sticky notes created. The graph is displayed in a different manner for each type of sticky note. For example, the graph is displayed in a color-coded manner for each type of sticky note. The teacher or the administrator can grasp what type of electronic sticky notes each student in the selected homeroom creates and uses for learning. That is, according to the server 10, the interaction process between the user and the server 10 can reliably assist the user in performing a technical task. Here, the technical task performed by the user is to analyze the usage status of the sticky note function provided by the server 10 for each homeroom.

For example, when "Sticky Note Function" is selected as the selected item, "Course" as the analysis unit, "Teacher A" as the teacher to be analyzed, and "Number of Sticky Notes Created" as the display content, the controller 11 derives the number of electronic sticky notes created by each student belonging to the course taught by Teacher A selected as the analysis target for each type of sticky note. For example, first, the controller 11 extracts students belonging to each course taught by the selected teacher from the user database 124. Next, for each course, the controller 11 derives the number of electronic sticky notes created by each extracted student for each type of sticky note based on data stored in the operation history database 128. Then, for each course, the controller 11 generates screen information for displaying a graph on the screen 342 by graphing the number of electronic sticky notes created by each student in a different manner for each type of sticky note. When the first terminal 20A receives the screen information of the screen 342 on which the graph is displayed transmitted from the server 10 via the communicator 25A, the controller 21A causes the display 24A to display the screen 342 corresponding to the received screen information in cooperation with the browser. On the screen 342, the graph is displayed in which the horizontal axis represents each student belonging to the course, and the vertical axis represents the number of electronic sticky notes created. The graph is displayed in a different manner for each type of sticky note. For example, the graph is displayed in a color-coded manner for each type of sticky note. The teacher or the administrator can grasp what type of electronic sticky notes each student in the course taught by the selected teacher creates and uses for learning. That is, according to the server 10, the interaction process between the user and the server 10 can reliably assist the user in performing a technical task. Here, the technical task performed by the user is to analyze the usage status of the sticky note function provided by the server 10 for each course.

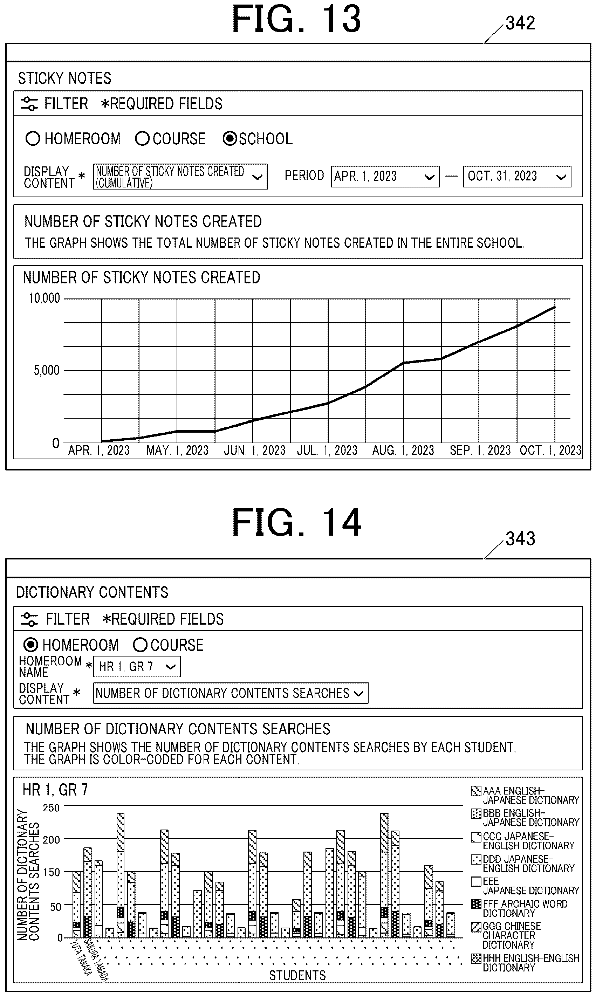

For example, when "Sticky Note Function" is selected as the selected item, "School" as the analysis unit, and "Number of Sticky Notes Created" as the display content, the controller 11 derives the transition of the total number of electronic sticky notes created during a designated period in the school to which the logged-in user belongs. The school to which the logged-in user belongs is the school associated with the user in the user database 124. For example, first, the controller 11 extracts students belonging to the school from the user database 124. Next, based on data stored in the operation history database 128, the controller 11 calculates the total (cumulative) number of electronic sticky notes created by the extracted students from the start of the designated period for each predetermined period in the designated period. Then, the controller 11 generates screen information for displaying a graph on the screen 342 by arranging the calculated total numbers in chronological order. When the first terminal 20A receives the screen information of the screen 342 on which the graph is displayed transmitted from the server 10 via the communicator 25A, the controller 21A causes the display 24A to display the screen 342 corresponding to the received screen information in cooperation with the browser. As shown in FIG. 13, on the screen 342, the graph is displayed in which the horizontal axis represents the period, and the vertical axis represents the (total) number of electronic sticky notes created in the entire school. The administrator can grasp the transition of the creation status of the electronic sticky notes in the entire school during the designated period. That is, according to the server 10, the interaction process between the user and the server 10 can reliably assist the user in performing a technical task. Here, the technical task performed by the user is to analyze the usage status of the sticky note function provided by the server 10 in the entire school.

For example, when "Electronic Dictionary Function" is selected as the selected item, "Homeroom" as the analysis unit, "Homeroom 1, Grade 7" as the homeroom name to be analyzed, and "Number of Dictionary Contents Searches" as the display content, the controller 11 derives the number of electronic dictionary searches for each electronic dictionary by each student belonging to the homeroom selected as the analysis target. For example, first, the controller 11 extracts students belonging to the selected homeroom from the user database 124. Next, the controller 11 derives the number of searches for each electronic dictionary by each extracted student based on data stored in the operation history database 128. Then, the controller 11 generates screen information for displaying a graph on the screen 343 by graphing the number of electronic dictionary searches by each student in a different manner for each electronic dictionary. When the first terminal 20A receives the screen information of the screen 343 on which the graph is displayed transmitted from the server 10 via the communicator 25A, the controller 21A causes the display 24A to display the screen 343 corresponding to the received screen information in cooperation with the browser. As shown in FIG. 14, on the screen 343, the graph is displayed in which the horizontal axis represents each student belonging to Homeroom 1, Grade 7, and the vertical axis represents the number of electronic dictionary searches. The graph is displayed in a different manner for each electronic dictionary. For example, the graph is displayed in a color-coded manner for each electronic dictionary. The teacher or the administrator can grasp which dictionary each student in the selected homeroom is interested in and uses for homework and/or self-study. That is, according to the server 10, the interaction process between the user and the server 10 can reliably assist the user in performing a technical task. Here, the technical task performed by the user is to analyze the usage status of the electronic dictionary function provided by the server 10 for each homeroom.

For example, when "Electronic Dictionary Function" is selected as the selected item, "Course" as the analysis unit, "Teacher A" as the teacher to be analyzed, and "Number of Dictionary Contents Searches" as the display content, the controller 11 derives the number of electronic dictionary searches for each electronic dictionary by each student belonging to the course taught by the teacher selected as the analysis target. For example, first, the controller 11 extracts students belonging to each course taught by the selected Teacher A from the user database 124. Next, for each course, the controller 11 derives the number of searches for each electronic dictionary by each extracted student based on data stored in the operation history database 128. Then, for each course, the controller 11 generates screen information for displaying a graph on the screen 343 by graphing the number of electronic dictionary searches by each student in a different manner for each electronic dictionary. When the first terminal 20A receives the screen information of the screen 343 on which the graph is displayed transmitted from the server 10 via the communicator 25A, the controller 21A causes the display 24A to display the screen 343 corresponding to the received screen information in cooperation with the browser. On the screen 343, the graph is displayed in which the horizontal axis represents each student belonging to the course, and the vertical axis represents the number of electronic dictionary searches. The graph is displayed in a different manner for each electronic dictionary. For example, the graph is displayed in a color-coded manner for each electronic dictionary. By checking the graph, the teacher can check whether each student uses the dictionary as expected in light of the content of the course. The teacher can also grasp which dictionary each student taking the course is interested in and uses for homework and/or self-study. That is, according to the server 10, the interaction process between the user and the server 10 can reliably assist the user in performing a technical task. Here, the technical task performed by the user is to analyze the usage status of the electronic dictionary function provided by the server 10 for each course.

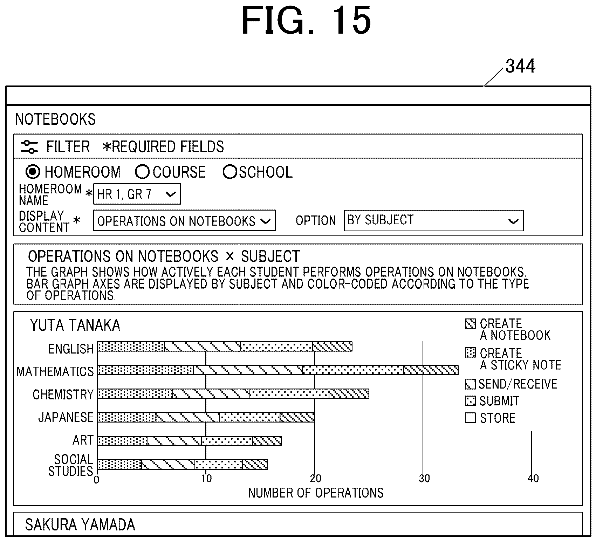

For example, when "Notebook Function" is selected as the selected item, "Homeroom" as the analysis unit, "Homeroom 1, Grade 7" as the homeroom name to be analyzed, "Operations on Notebooks" as the display content, and "By Subject " as the option, the controller 11 derives the number of operations on notebooks by each student belonging to the homeroom selected as the analysis target for each subject and for each type of operation. For example, first, the controller 11 extracts students of the selected homeroom from the user database 124. Next, for each subject, the controller 11 derives the number of operations on notebooks by each extracted student for each type of operation based on data stored in the operation history database 128. Then, for each student, the controller 11 generates screen information for displaying a graph on the screen 344 by graphing the number of operations on notebooks for each subject for each type of operation. When the first terminal 20A receives the screen information of the screen 344 on which the graph is displayed transmitted from the server 10 via the communicator 25A, the controller 21A causes the display 24A to display the screen 344 corresponding to the received screen information in cooperation with the browser. As shown in FIG. 15, on the screen 344, the graph is displayed for each student in which the vertical axis represents the subject, and the horizontal axis represents the number of operations on notebooks for each type of operation. The graph is displayed in a different manner for each type of operation on a notebook. For example, the graph is displayed in a color-coded manner for each type of operation. By checking the graph shown in FIG. 15, the teacher or the administrator can grasp what type of operation each student actively performs on notebooks for each subject. That is, according to the server 10, the interaction process between the user and the server 10 can reliably assist the user in performing a technical task. Here, the technical task performed by the user is to analyze the usage status of the notebook function provided by the server 10 for each student and for each subject.

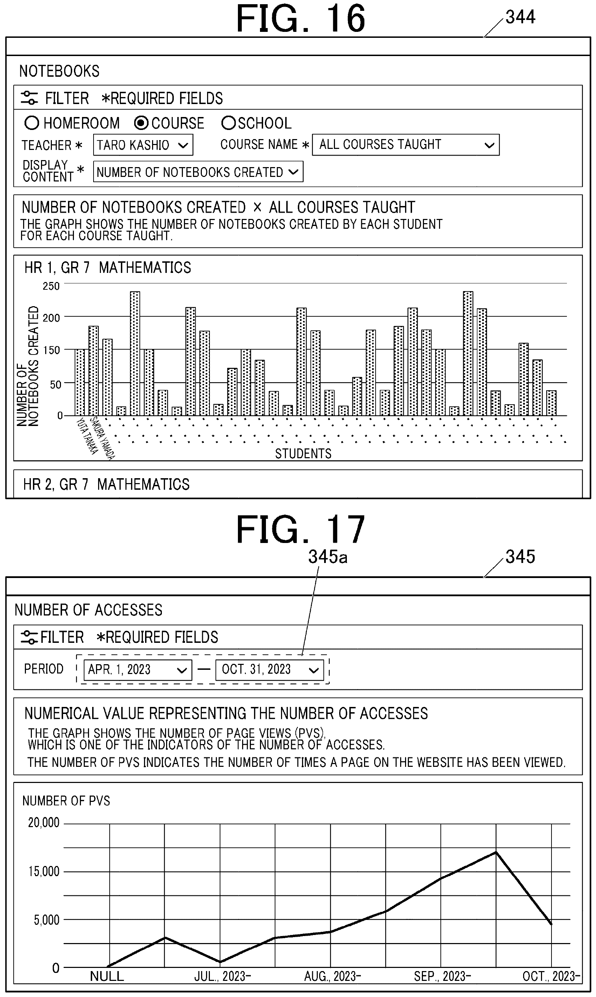

For example, when "Notebook Function" is selected as the selected item, "Course" as the analysis unit, "Taro Kashio" as the teacher to be analyzed, "All Courses Taught" as the course name, and "Number of Notebooks Created" as the display content, the controller 11 derives the number of notebooks created by each student belonging to each course of Mr. Taro Kashio selected as the analysis target. For example, first, the controller 11 extracts students belonging to each course of Mr. Taro Kashio from the user database 124. Next, the controller 11 derives the number of notebooks created by each extracted student for each course of Mr. Taro Kashio based on data stored in the operation history database 128. Then, the controller 11 generates screen information for displaying a graph on the screen 344 by graphing the number of notebooks created by each student belonging to each course of Mr. Taro Kashio. When the first terminal 20A receives the screen information of the screen 344 on which the graph is displayed transmitted from the server 10 via the communicator 25A, the controller 21A causes the display 24A to display the screen 344 corresponding to the received screen information in cooperation with the browser. As shown in FIG. 16, on the screen 344,a graph is displayed for each course of the selected teacher in which the horizontal axis represents each student belonging to the course and the vertical axis represents the number of notebooks created. By checking the graph shown in FIG. 16, the administrator can confirm a teacher who is able to utilize the learning support service in a course and a teacher who is not. In addition, the teacher can compare the number of notebooks created among his or her courses to help improve the courses. That is, according to the server 10, the interaction process between the user and the server 10 can reliably assist the user in performing a technical task. Here, the technical task performed by the user is to analyze a user who is able to utilize the learning functions provided by the server 10 and a user who is not.

The screen 344 that is displayed when "Notebook Function" is selected as the selected item and "School" as the analysis unit is an analysis screen obtained by replacing the "Number of Electronic Sticky Notes Created" in the screen 342 with "Number of Notebooks Created", and therefore, the description is incorporated herein. The administrator can grasp the creation status of notebooks in the entire school during a designated period.

For example, when "Number of Accesses" is selected as the selected item and "Apr. 1, 2023 to Oct. 31, 2023" as the period, the controller 11 derives the number of page views (PVs) as the number of accesses during the period for each predetermined period (for example, every half month). For example, the controller 11 aggregates the number of PVs for each predetermined period during the selected period from the access history database 129. Then, the controller 11 generates screen information for displaying a graph on the screen 345 by graphing the number of PVs for each predetermined period during the selected period. When the first terminal 20A receives the screen information of the screen 345 on which the graph is displayed transmitted from the server 10 via the communicator 25A, the controller 21A causes the display 24A to display the screen 345 corresponding to the received screen information in cooperation with the browser. As shown in FIG. 17, on the screen 345, the graph is displayed in which the horizontal axis represents the period, and the vertical axis represents the number of PVs. The administrator can grasp the transition of the access status to the learning support service during the designated period. That is, according to the server 10, the interaction process between the user and the server 10 can reliably assist the user in performing a technical task. Here, the technical task performed by the user is to analyze the access status of the learning functions provided by the server 10. The number of accesses is not limited to the number of PVs as long as the number of accesses indicates the number of accesses to a plurality of learning functions in the school to which the user belongs. For example, the number of sessions may be used instead of the number of PVs. The graphs displayed on the screens 342 to 345 show the derived results (analysis results) of the usage status of the selected items to be analyzed.

For example, the server 10 may store score information of each of the students using the learning support service in the storage 12 or the like in association with the user ID of the student. Then, in a case where the homeroom or course is selected as the analysis unit of the usage status of the learning function, the controller 11 may cause the display 24A of the first terminal 20A to display the usage status of the electronic sticky note function, the notebook function, or the electronic dictionary function by each of the students belonging to the selected homeroom or course, and the score information of the student, side by side. For example, when a graph of each of the students is displayed on the screens 342 to 344, the graph and the score information of the student may be displayed side by side. This allows the teacher or the administrator to compare scores of students who frequently use the electronic sticky note function or notebook function with scores of students who do not, thereby enabling the teacher or the administrator to grasp the correlation between the use of the electronic sticky note function or notebook function and the scores. Similarly, this allows the teacher or the administrator to compare scores of students who have searched an electronic dictionary many times with scores of students who have not, thereby enabling the teacher or the administrator to easily grasp the correlation between the number of searches of the electronic dictionary and the scores. In addition, for example, the controller 11 may notify a student to use the electronic sticky note function if the number of electronic sticky notes created or number of notebooks created (or number of operations) by the student is equal to or less than a predetermined threshold and the score of the student is also equal to or less than a predetermined threshold. For example, the controller 11 may cause the display 24B to display a message notifying the student to use the electronic sticky note function or the notebook function when the student logs in. This makes it possible to automatically encourage a student who rarely uses the learning functions to use the learning functions.

As described above, the controller 11 of the server 10 acquires the creation history information of electronic sticky notes created by the learner via the second terminal 20B. When the school is designated as the analysis unit of the usage status of the electronic sticky note function by the learning instructor or the administrator via the first terminal 20A, the controller 11 derives the total number of electronic sticky notes created by learners of the same school as the school associated with the learning instructor or the administrator based on the creation history information of the electronic sticky notes, and causes the first terminal 20A to display the derived result. This allows the learning instructor and the administrator to easily grasp the usage status of the electronic sticky note function in the entire school.

For example, as a result of deriving the total number of electronic sticky notes created in the entire school, the controller 11 causes the first terminal 20A to display a graph in which the horizontal axis represents the period, and the vertical axis represents the total number of electronic sticky notes created. This allows the learning instructor or the administrator to easily grasp the transition of the total number of electronic sticky notes created in the entire school in a predetermined period.

In addition, for example, when the homeroom or the course is designated as the analysis unit by the learning instructor or the administrator via the first terminal 20A, the controller 11 derives the number of electronic sticky notes created by each learner belonging to the designated homeroom or course based on the creation history information and causes the first terminal 20A to display the derived result. This allows the learning instructor or the administrator to easily grasp the number of sticky notes created by each learner belonging to the designated homeroom or course.

Further, for example, the controller 11 causes the first terminal 20A to display a graph in which the horizontal axis represents a learner belonging to the designated homeroom or a learner belonging to the designated course, and the vertical axis represents the number of electronic sticky notes created, as the derived result. This allows the learning instructor or the administrator to more easily grasp the number of sticky notes created by each learner belonging to the designated homeroom or course.

There is a plurality of types of electronic sticky notes, and the controller 11 derives the number of electronic sticky notes created by each learner for each type of electronic sticky note. This allows the learning instructor or the administrator to easily grasp the number of electronic sticky notes created by each learner belonging to the designated homeroom or course for each type of electronic sticky note.

The controller 11 causes the first terminal to display a graph in which the horizontal axis represents a learner belonging to the designated homeroom or a learner belonging to the designated course, and the vertical axis represents the number of electronic sticky notes created, showing the number of electronic sticky notes created in a different manner for each type of electronic sticky note. This allows the learning instructor or the administrator to more easily grasp the number of electronic sticky notes created by each learner belonging to the designated homeroom or course for each type of electronic sticky note.

In a case where a plurality of electronic sticky notes is created using a plurality of different electronic dictionaries in a single course, the controller 11 acquires the creation history information of the electronic sticky notes created in each of the plurality of electronic dictionaries and adds up the number of electronic sticky notes created in each of the plurality of electronic dictionaries to derive the total number. Therefore, when a plurality of electronic sticky notes is created using a plurality of electronic dictionaries in a single course, the number of electronic sticky notes created in each of the plurality of electronic dictionaries can be counted towards the total number of electronic sticky notes created.

The above embodiment describes a suitable example of the information processing apparatus, the information processing system, and the program according to the present disclosure. This is not intended to limit the present invention. For example, the information stored in the database described in the above embodiment is an example, and the present invention is not limited thereto.

In addition, for example, in the above description, as a computer readable medium storing the programs to perform the processes of the present invention, an HDD, a nonvolatile semiconductor memory or the like is used. The computer readable medium, however, is not limited to this example. The computer readable medium may be a portable recording medium such as a CD-ROM. Further, as a medium to provide data of the programs via a communication line, a carrier wave may be used.

## Claims

1. An information processing apparatus (10) that is configured to be communicably connected to a first terminal (20A) configured to be used by a learning instructor or an administrator and a plurality of second terminals (20B) configured to be used by a plurality of learners, the plurality of second terminals (20B) each including an electronic sticky note function for creating an electronic sticky note related to learning, comprising:
an acquirer (11) that acquires creation history information of the electronic sticky note created by the plurality of learners via the plurality of second terminals (20B); and
a display controller (11) that, in response to a school being designated as an analysis unit of usage status of the electronic sticky note function by the learning instructor or the administrator via the first terminal (20A), derives a total number of the electronic sticky note created by the plurality of learners of a same school as a school associated with the learning instructor or the administrator based on the creation history information, and causes the first terminal (20A) to display a derived result.

2. The information processing apparatus (10) according to claim 1, wherein, as the derived result, the display controller (11) causes the first terminal (20A) to display a graph in which a horizontal axis represents a period and a vertical axis represents the total number of the electronic sticky note created.

3. The information processing apparatus (10) according to claim 1 or 2, wherein in response to a homeroom or course being designated as the analysis unit by the learning instructor or the administrator via the first terminal (20A), the display controller (11) derives numbers of the electronic sticky note created by the respective plurality of learners belonging to the designated homeroom or course based on the creation history information, and causes the first terminal (20A) to display a derived result.

4. The information processing apparatus (10) according to claim 3, wherein
the electronic sticky note includes a plurality of types of electronic sticky notes, and
the display controller (11) derives the numbers of the electronic sticky note created by the respective plurality of learners with respect to each type of the plurality of types of electronic sticky notes.

5. The information processing apparatus (10) according to claim 3 or 4, wherein, as the derived result, the display controller (11) causes the first terminal (20A) to display a graph in which a horizontal axis represents a learner belonging to the designated homeroom or course and a vertical axis represents a number of the electronic sticky note created by the learner.

6. The information processing apparatus (10) according to claim 4, wherein, as the derived result, the display controller (11) causes the first terminal (20A) to display a graph in which a horizontal axis represents a learner belonging to the designated homeroom or course and a vertical axis represents a number of the electronic sticky note created by the learner, showing the numbers of the electronic sticky note created in a different manner with respect to each type of the plurality of types of electronic sticky notes.

7. The information processing apparatus (10) according to any one of claims 1 to 6, wherein
the electronic sticky note includes an electronic sticky note created using an electronic dictionary, and,
when the electronic sticky note includes a plurality of electronic sticky notes created using a plurality of electronic dictionaries in a single course, the acquirer (11) acquires creation history information of the electronic sticky note created using each of the plurality of electronic dictionaries, and
the display controller (11) adds up numbers of the electronic sticky note created using the respective plurality of electronic dictionaries to derive the total number of the electronic sticky note.

8. An information processing system comprising:
the information processing apparatus (10) according to any one of claims 1 to 7; and
the first terminal (20A) and the plurality of second terminals (20B) communicably connected to the information processing apparatus (10).

9. A program executed by a computer of an information processing apparatus (10), wherein:
the information processing apparatus (10) is configured to be communicably connected to a first terminal (20A) configured to be used by a learning instructor or an administrator and a plurality of second terminals (20B) configured to be used by a plurality of learners, the plurality of second terminals (20B) each including an electronic sticky note function for creating an electronic sticky note related to learning: and
the program causes the computer to function as:
an acquirer (11) that acquires creation history information of the electronic sticky note created by the plurality of learners via the plurality of second terminals (20B); and
a display controller (11) that, in response to a school being designated as an analysis unit of usage status of the electronic sticky note function by the learning instructor or the administrator via the first terminal (20A), derives a total number of the electronic sticky note created by the plurality of learners of a same school as a school associated with the learning instructor or the administrator based on the creation history information, and causes the first terminal (20A) to display a derived result.
